(19) Europäisches Patentamt
European Patent Office
Office européen des brevets

(11) **EP 4 289 703 A1**

(12) **EUROPEAN PATENT APPLICATION**

(43) Date of publication:
**13.12.2023  Bulletin 2023/50**

(21) Application number: **22177626.3**

(22) Date of filing: **07.06.2022**

(51) International Patent Classification (IPC):
**B62D 15/02** (2006.01)

(52) Cooperative Patent Classification (CPC):
**B62D 15/0285**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Internal Automotive Software Egypt,**
**a limited liability company**
**Giza, Cairo (EG)**

(72) Inventors:
• **RADWAN, Mohamed**
  **Giza, Cairo (EG)**
• **HOSSAM, Amr**
  **Giza, Cairo (EG)**

(74) Representative: **Hofstetter, Schurack & Partner**
**Patent- und Rechtsanwaltskanzlei**
**PartG mbB**
**Balanstrasse 57**
**81541 München (DE)**

(54) **METHOD TO OPERATE AN AT LEAST ASSISTED FORWARD PERPENDICULAR OR ANGLED PARKING FUNCTION FOR A VEHICLE**

(57)    Method and vehicle (1) to operate an at least assisted forward perpendicular or angled parking function for the vehicle (1) comprising: determining (S3) a parking position (14) and boundary lines (15, 16) for a parking space (11) in direction of objects (12, 13); determining (S4) a first position (17) of the vehicle (1) in which a front outermost corner (8) of the vehicle (1) is positioned on a first boundary line (15), wherein in the first position (17) the vehicle (1) is movable away from the parking space (11) without collision with any object (12, 13); determining (S5) steering commands (27) to move the vehicle (1) between the first position (17) and the parking position (14), wherein the vehicle (1) is moved partially along the first boundary line (15); operating (S6) the vehicle (1) according to the steering commands (27).

Fig.2

**Description**

The invention relates to a method to operate an at least assisted forward perpendicular or angled parking function for a vehicle. The invention furthermore relates to a vehicle with an at least assisted forward perpendicular or angled parking function, a processing device for such a vehicle and a computer program product.

A vehicle may comprise an assisted parking function configured to provide steering and/or acceleration commands for operating the vehicle during a parking maneuver. The parking maneuver typically comprises moving the vehicle between a position located outside of a parking space and a parking position in the parking space. The operation of the at least assisted parking function thus may comprise longitudinal and/or transversal guidance of the vehicle.

DE 10 2009 040 373 A1 discloses a method for executing a semi-autonomous parking procedure of a vehicle by a parking assistance system. The method involves detecting displacements of the vehicle to bounding objects by a sensor unit after introducing the parking procedure. The displacements may be corrected by a predetermined correction criterion.

However, DE 10 2009 040 373 A1 relates to backwards perpendicular parking. A parking maneuver for forward perpendicular parking with none or only few changes of driving direction of the vehicle may be challenging, particularly in a tight parking environment where, for example, an area for maneuvering outside the sparking space is limited.

It is the object of the invention to provide at least assisted forward perpendicular or angled parking in a tight parking environment.

The object is solved by the independent claims.

A first aspect of the invention relates to a method to operate an at least assisted forward perpendicular or angled parking function for a vehicle. The at least assisted parking function may be a semi-automatic or fully automatic parking function. For example, the at least assisted parking function provides at least steering commands for a steering system of the vehicle. By means of the at least assisted forward perpendicular or angled parking function, it is thus possible to park a vehicle by manual execution of acceleration commands and automatic execution of steering commands by the parking function.

The invention is based on the observation that parking in or out of a perpendicular or angled parking space that is bounded by objects on both sides can be difficult to perform in one step meaning without changing a driving direction of the vehicle, particularly in case of forward parking. Usually, several orientation corrections are necessary to forward park the vehicle at a parking position in the parking space. An optimal parking path should be performable in one step or with as little steps and hence changes of driving direction as possible.

The one step parking maneuver can be based on the idea that a front outermost corner of the vehicle should be moved parallel to one of the objects limiting the parking space for as long as possible, so that the vehicle can park without further changing its driving direction and without colliding with the object. The location of the vehicle at every point in time during the parking maneuver should be characterized in a way that the vehicle is movable at the location without collision with any object adjacent to the parking space. Therefore, starting and ending orientations of the vehicle that do not exceed parking space boundaries have to be determined.

The method comprises providing a sensor information describing a perpendicular or angled parking space. A first object and an opposite second object bound the perpendicular or angled parking space laterally. The perpendicular or angled parking space is hence spatially confined by two objects, which can be other parked vehicles or static boundaries of the parking space such as a wall or a fence. The two objects are, in case they are parked vehicles, parked in an orientation that is essentially the same direction as the intended parking direction of the vehicle, meaning that, for example, the other objects are parked in perpendicular or angled parking spaces, which are in particular aligned parallel to the parking space intended for parking of the vehicle.

The perpendicular or angled parking space may alternatively be referred to as diagonal parking space. The angled parking space may alternatively be referred to as a fishbone parking space. The parking space has an entrance side oriented towards, for example, a road. The entrance side is shorter than adjacent sides of the parking space. At the parking position in the parking space, a length of the vehicle is essentially parallel to the adjacent sides and a width of the vehicle is essentially parallel to the entrance side. An angle between the entrance side and the adjacent sides is typically between greater than 0 and 90 degrees. The two objects may face the adjacent sides of the parking space. A front line of each or of at least one of the objects is preferably essentially parallel to the entrance side of the parking space.

The sensor information describes, for example, a distances between the vehicle and the first and second object that limit the parking space laterally. By evaluating the provided sensor information, it is hence possible to define a parking space geometry and dimension.

The method comprises determining a parking position information and a first boundary line information. The determination is performed by evaluating the provided sensor information. The parking position information describes a parking position in the parking space. The parking position can alternatively be referred to as goal position or target position. The parking position is, for example, a planned position for the vehicle in an available parking space between the two objects. Alternatively, the parking position is the location where the vehicle is parked.

The first boundary line information describes a first boundary line of the parking space in direction of the first object. The first boundary line is hence an imaginary line between the parking space and the first object. It is, in particular, parallel to the adjacent side of the parking space towards the first object. The first boundary line is preferably aligned parallel to the length direction of the parking position and the parking space. The boundary line may be distant to the parking position. The first boundary line can alternatively be referred to as tolerance lines. The first boundary line may be understood as line, which the vehicle is not supposed to cross towards the first object at any time of the at least assisted forward parking of the vehicle.

The method comprises determining a first position information. The determining is carried out under consideration of the determined first boundary line information. The first position information describes a first position of the vehicle in which a front outermost corner of the vehicle is positioned on the first boundary line. In the first position the vehicle is movable away from the parking space without collision with the first object and/or the second object. The front outermost corner is preferably positioned at a side of the vehicle that faced away from the parking space while the vehicle had approached the parking space before parking.

In the first position, at least a rear part of the vehicle has not yet been moved in the parking space or has already been moved out of the parking space. However, at least a front part of the vehicle is positioned on the parking space in the first position. If, for example, the vehicle approaches the parking space from a first side so that it first passes by the second object and then, if it continued its travel in forward direction, it would also pass by the first object. The first position is then a position in which the left front outermost corner (viewed in driving direction) is positioned on the first boundary line. If the vehicle approached the parking space from the opposite direction, the right front outermost corner (viewed in driving direction) is positioned on the first boundary line, if the vehicle had first passed by the second object and after having continued its travel had passed by the first object.

The method also comprises determining steering commands for the steering system of the vehicle. The steering commands are determined under consideration of the determined parking position information and the first position information. The steering commands describe a steering maneuver to move the vehicle between the first position and the parking position without collision with the first object and/or the second object. The steering maneuver is a forward parking maneuver and comprises moving the vehicle with its front outermost corner at least partially along the first boundary line. It is hence possible to provide steering commands for driving in or out of the parking space. The steering commands comprise at least one specific command regarding a steering angle. The steering angle is connected to a wheel angle of wheels of the vehicle. The method furthermore comprises operating the vehicle according to the determined steering commands. Acceleration commands for a drive system of the vehicle may be provided manually by the driver.

Since the front outermost corner is moved at least partially along the first boundary line, there is no switching in driving direction necessary during the movement between the first position and the parking position. The method results in an at least assisted steering maneuver for the forward perpendicular or angled parking. As there is no change of driving direction necessary to perform the described steps, it is possible to park the vehicle in tiny or small parking environments.

The positions mentioned are preferably described by coordinates and/or an angle as an orientation information. The coordinates as well as the angle information can be determined in relation to a center of a rear axle of the vehicle and/or in relation to an imaginary horizontal line that is, for example, parallel to the transversal direction of the vehicle in the parking position. The horizontal line is thus, for example, parallel to a boundary line that restricts the parking space in length direction.

"Essentially" in the context of the invention comprises deviations of up to 1 percent, 2 percent, 3 percent, 5 percent, 10 percent, 20 percent, 30 percent, or in particular 50 percent of the corresponding position and/or orientation. In the context of a parallel alignment, "essentially" may comprise deviations of up to 1 degree, 2 degree, 3 degree, 5 degree, 10 degree, 20 degree, 30 degree, or in particular 45 degree. In the context of the boundary lines, "essentially" may comprise a deviation from the corresponding boundary line that depends on a boundary line distance between the object and the adjacent boundary line. A maximum deviation may be less than 5 percent, 10 percent, 20 percent, 30 percent, or in particular 50 percent of the boundary line distance. The deviation may be any deviation between the above-mentioned values.

According to an embodiment, the method comprises determining a second position information. The second position information describes a second position of the vehicle in which the front outermost corner of the vehicle is positioned on the first boundary line. The second position is reachable by moving the vehicle with regard to the parking position at a maximum steering angle of the steering system. In other words, the vehicle reaches the second position, if it starts driving at the parking position at maximum steering angle. The second position information is determined at least under consideration of the parking position information and the first boundary line information. In the second position, the angle of the vehicle in relation to the first boundary line is hence smaller compared to this angle in the first position. Compared to the first position, the second position has more overlap with the parking position.

Determining the steering commands comprises considering the determined second position information so that the steering maneuver comprises moving the vehicle via the determined second position. If the vehicle is parked in the parking space, it first reaches the first position, then the second position and finally the parking position, whereas the reverse maneuver starts with the vehicle in the parking position and comprises moving it to the second position and then to the first position. At the first position, the vehicle can leave the parking space environment without collision with any of the two objects. The second position information facilitates defining the steering commands in a way that the vehicle is moved along the first boundary line for as long as possible.

According to another embodiment, determining the second position information comprises calculating an angle information. The angle information describes an angle between a location of a reference point of the vehicle in the parking position and the location of the reference point in the second position. In particular, the reference point is the front outermost corner of the vehicle. The angle information can be referred to as $\Delta\theta$. The angle information quantifies by which angle the vehicle is to be moved to reach the second position if the vehicle starts at the parking position. Based on the calculated angle information, the steering commands for the maneuver between the parking position and the second position are determined. This information is particularly reasonable to calculate, because it allows to determine the steering commands independent of absolute orientations of the parking position and the second position.

Moreover, an embodiment comprises that the angle information is calculated in relation to a center of rotation of the vehicle. The center of rotation is determined under consideration of the maximum steering angle. The center of rotation is hence the center of rotation that is located at a minimal distance to the vehicle. The center of rotation is a point located outside of the vehicle. The calculation of the second position information, in particular an angle information comprised by the second position information, is possible based on trigonometry. This allows for a particularly straight forward calculation of the angle information based at least on the geometry of the vehicle and the parking space.

A further embodiment comprises that the determined steering commands comprise that the movement of the vehicle between the first position and the second position is essentially along the first boundary line. Essentially along the first boundary line in this context may, for example, comprise deviations from the first boundary line of up to 1 percent, 5 percent, 10 percent, 20 percent, 30 percent, or in particular 50 percent of the total width of the parking space. Alternatively, the tolerated deviation from the first boundary line can be calculated in relation to the boundary line distance between the first object and the first boundary line. In this context, the maximum deviation from the first boundary line can be less than 5 percent, 10 percent, 20 percent, 30 percent, or in particular 50 percent of the boundary line distance. Steering commands for wheels of a vehicle between the first and second position can be determined based on trigonometry. This calculation assumes that the vehicle's steering profile is determined in a way that the front outermost corner moves in a straight line starting with a given orientation $\theta_1$ at the second position and ending with a given orientation $\theta_n$ at the first position or vice versa. The steering commands can hence be computed accurately based on relatively simple calculations. This may result in short calculation times for determining the steering commands.

Moreover, an embodiment comprises that the respective determination comprises considering a vehicle dimension information describing a dimension of the vehicle. The vehicle dimension information comprises, for example, a vehicle length, in particular including safety tolerances, a vehicle width, in particular including safety tolerances, a vehicle wheelbase, a vehicle distance from rear axle to front axle, and/or a maximum front wheel angle of the vehicle. The maximum front wheel angle is alternatively referred to as maximum steering angle. The determined steering commands are thus vehicle dependent and therefore the parking according to the determined steering commands is particularly reliable in regard of collision prevention.

A preferred embodiment comprises determining a second boundary line information. The second boundary line information describes a second boundary line for the parking space in direction of the second object. The second boundary line is hence an imaginary line located between the determined parking position and the second object. It is, in particular, parallel to the adjacent side of the parking space towards the second object. Details on the first boundary line as described above apply analogously for the second boundary line. The first and second boundary lines are separated from each other by a distance that corresponds to a parking space width. It is possible that the two boundary lines are arranged parallel or at an angle to each other. The angle between the boundary lines depends on an orientation of a side of the first object that faces the parking space to a side of the second object that faces the parking space. Thus, in case one of the objects is orientated tilted in relation to the parking space, the parking position and/or the other object, the corresponding boundary line is not parallel to the other boundary line.

The first position information is determined under consideration of the second boundary information. In the first position, a rear outermost corner of the vehicle is positioned on the second boundary line. The front outermost corner is in particular in transverse direction opposite the rear outermost corner. The transverse direction is a width direction of the vehicle. For example, if the front outermost corner is located on a driver's side of the vehicle, the rear outermost corner is located on a passenger's side and hence on the opposite side of the vehicle. In the second position, the rear outermost corner of the vehicle is not any longer or not yet positioned on the second boundary line.

Since the width of the parking space is typically wider than a width of a vehicle in transverse direction, the vehicle is tilted by an angle greater than zero in order to be positioned in the first position. Only in such a tilted position the two described outermost corners can each be positioned on one of the boundary lines. If, for example, the vehicle approaches the parking space from a first side so that it first passes by the second object and then, if it continued its travel in forward direction, it would also pass by the first object. The first position is then a position in which the left front outermost corner (viewed in driving direction) is positioned on the first boundary line and the right rear outermost corner (viewed in driving direction) on the second boundary line. The first position is guaranteed to allow collision-free steering in regard of the second object because of the described location of the rear outermost corner of the vehicle on the second boundary line.

According to another embodiment, the method comprises determining a distance information. The distance information describes a distance between the rear outermost corner of the vehicle and a front line of the second object in the first position under consideration of a parking space geometry and/or a dimension of the second object. The parking space geometry and the dimension of the second object are, in particular, determined by evaluating the provided sensor information. Determining the first position information comprises considering the determined distance information. Considering the distance information further contributes to collision preventions. This is because the distance has an impact on how reliable the vehicle can move away from or towards the parking space without collision with the second object.

Besides, there is an embodiment that comprises that a boundary line distance between the object and the respective boundary line corresponds to a distance measurement tolerance range of a sensor device providing the sensor information. The boundary line distance is hence determined under consideration of the sensor device that captures and provides the sensor information. If, for example, the sensor information is provided by a set of ultrasonic sensors, which, for example, have a measurement tolerance of 20 centimeter, the boundary line distance is set to be 20 cm. If, however, a more accurate set of sensors is used, for example, one or multiple radar devices, the boundary line distance may be smaller, for example, only between 5 and 10 centimeter. During the movement of the vehicle it is hence as close as possible to the bounding objects while still avoiding collision with the objects. In case a precise sensor device is used, the possible parking space, where the parking position can be located, increases compared to a sensor with less precision and hence a larger tolerance range. The method is therefore easily adaptable to the sensor device that provides sensor information.

Moreover, an embodiment comprises that the determined parking position information describes a parking position located centered in the parking space. Preferably, once the parking space is recognized as such by evaluating the sensor information, the parking position is defined as a position located in the middle of the parking space in transverse direction of the parking space. The transverse direction is oriented parallel to the width of the parking space. Preferably, there is a gap with a minimal width of, for example, 20 centimeter between each side of the parking position and the adjacent first or second object in transverse direction. As a result, there are equally big gaps between the driver's side of the parked vehicle and the adjacent object and the opposite passenger's side of the vehicle and the other object. This ensures particularly orderly parking in the center of the parking space.

In case a parking space is too small in width for the vehicle and the gaps, the described method, in particular operating the vehicle according to the determined steering commands, does not take place. The describe method is hence only applied for a parking spaces which is big enough for the vehicle.

An alternative embodiment comprises determining if passengers are within the vehicle. In other words, it is determined how many vehicle occupants the vehicle comprises. Thus, the method may comprise determining a passenger information. The passenger information describes at least if the vehicle comprises at least one vehicle occupant other than a driver or not. Additionally, the passenger information may describe a number of vehicle occupants and/or the location of each occupant in the vehicle. In other words, the passenger information describes at least if there is only the driver in vehicle cabin of the vehicle or if there are additional passengers in the vehicle cabin. If the vehicle only comprises the driver according to the determined passenger information, the determined parking position information describes a parking position at which there is a greater gap between the vehicle and the object on a driver's side of the vehicle compared to the gap between the vehicle and the object on a passenger's side of the vehicle. In other words, if there is only the driver in the vehicle, the parking position is chosen in a way that there is more space for the driver to leave or enter the vehicle on the driver's side of the vehicle compared to the other side where no vehicle occupant is currently seated. It is hence possible to not determine a centered parking position in the parking space but shift the parking position towards one of the bounding objects depending on the distribution of vehicle occupants in the vehicle cabin. This allows for a more comfortable entering and leaving of the vehicle for the driver in case the driver is the only occupant of the vehicle.

Moreover, an embodiment comprises determining acceleration commands for a drive system of the vehicle. The acceleration commands describe a longitudinal guidance for the vehicle between the first position and the parking position. The method then comprises operating the vehicle according to the determined acceleration commands. It is not only possible to provide steering commands for the vehicle and to execute them by the parking function but it is furthermore possible that longitudinal guidance of the vehicle is as well assisted and preferably fully automatic. Therefore, the acceleration commands are provided. The parking function then provides transversal as well as longitudinal guide of the vehicle at least during the parking maneuver between the first and second parking position.

It can be intended that the method comprises determining a trajectory along which the vehicle can be moved from any starting position to the first position or from the first position to any end position further away from the parking space than the first position. The method is hence not restricted to the movement between the first position and the parking position.

According to another aspect, the invention relates to a vehicle with an at least assisted forward perpendicular or angled parking function. The vehicle is configured: to provide a sensor information describing a perpendicular or angeled parking space laterally bounded by a first object and an opposite second object; by evaluating the provided sensor information, to determine a parking position information describing a parking position in the parking space, and a first boundary line information describing a first boundary line for the parking space in direction of the first object; under consideration of the determined first boundary line information, to determine a first position information describing a first position of the vehicle in which a front outermost corner of the vehicle is positioned on the first boundary line, wherein in the first position the vehicle is movable away from the parking space without collision with the first object and/or the second object; under consideration of the determined parking position information and first position information, to determine steering commands for a steering system of the vehicle, wherein the steering commands describe a steering maneuver to move the vehicle between the first position and the parking position without collision with the first object and/or the second object, wherein the steering maneuver is a forward parking maneuver and comprises moving the vehicle with its front outermost corner at least partially along the first boundary line; and to operate the vehicle according to the determined steering commands. The vehicle is preferably a motor vehicle, such as a passenger car, a truck, a bus or a motor bike. The vehicle comprises a processing device.

An embodiment of the vehicle comprises that a sensor device of the vehicle provides the sensor information. The sensor device comprises multiple sensor units positioned at least at a front and rear side of the vehicle. The sensor device is in particular an ultrasonic sensor, a radar device and/or a camera. In a simple embodiment, the vehicle comprises eight ultrasonic sensors of which four are positioned in the front and the other four are positioned in the rear of the vehicle. Of each set of four sensors, two cover the front or rear environment of the vehicle and the other two the side environment of the vehicle. Therefore the other two sensors can be positioned at side edges of a front or rear bumper of the vehicle. Preferably, all eight sensors are positioned in the bumpers of the vehicle. This allows for performing the method without any external data supply because the vehicle provides its own sensor information. In other words, the vehicle is independent from external sensor devices to provide the at least assisted parking function.

In particular, the steering system of the vehicle is configured to steer the vehicle by operating front wheels of the vehicle.

Another aspect relates to a processing device for a vehicle. The processing device is, for example, an on-board computer of the vehicle. The processing device is configured to perform the method as described above. The processing device performs the method. The processing device may comprise one or more microprocessors and/or one or more microcontrollers and/or one or more ASIC (application specific integrated circuit). Further, it may comprise a computer program product (meaning program code) that is designed to perform the method. The computer program product may be stored in a data storage of the processing device.

The invention furthermore relates to a computer program product comprising instructions which, when the program is executed by the processing device of the vehicle, cause the processing device to carry out the method as described above. The computer program product can be referred to as computer program.

An information in the sense of the invention can be described by respective data. For example, the sensor information can be described by sensor data. This applies analogously to all information mentioned in the application.

The invention comprises combinations of the described embodiments. It also comprises embodiments of the vehicle, the processing device and the computer program product according to an embodiment or a combination of embodiments of the inventive method.

The figures show in:

Fig. 1    a schematic representation of a vehicle;

Fig. 2    a schematic representation of the vehicle in different positions while parking in a parking space;

Fig. 3    a schematic representation of a method to operate an at least assisted forward perpendicular or angled parking function;

Fig. 4    a schematic representation of variables to determine a second position of the vehicle;

Fig. 5    a schematic representation of variables to determine an intermediate position between a first and second position of the vehicle;

Fig. 6    a schematic representation of variables involved in determining a first position of the vehicle; and

Fig. 7    a schematic representation of variables in a first position of the vehicle.

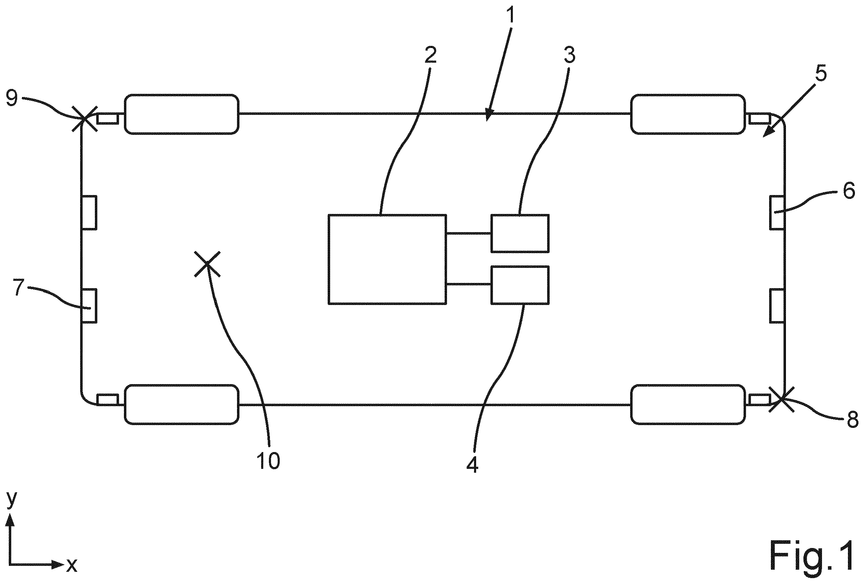

Fig. 1 shows a vehicle 1 that comprises a processing device 2. The vehicle 1 comprises a steering system 3 and a drive system 4. The steering system 3 is determined to operate a transverse guidance of the vehicle 1. The drive system 4 is configured to operate a longitudinal guidance of the vehicle. The processing device 2 provides commands for the steering system 3 and/or the drive system 4. By operating the drive system 4, the vehicle 1 may be accelerated or braked. It is possible that an at least assisted parking function for the vehicle 1 is implemented in the processing device 2. The parking function is a forward perpendicular or angled parking function meaning that it is configured to at least assist a forward parking maneuver into a perpendicular or angled parking lot, in particular a perpendicular or angled (fishbone) parking lot.

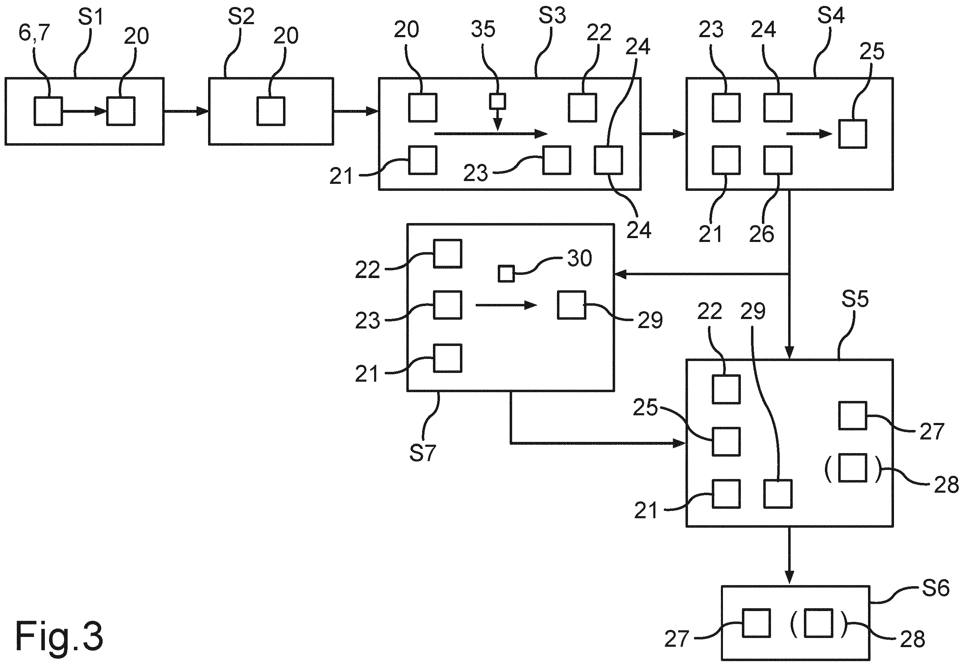

The vehicle 1 comprises a sensor device 5 that may comprise multiple sensor units. Here, the sensor device 5 comprises several front sensors 6 as well as multiple rear sensors 7. The front sensors 6 are positioned at a front end of the vehicle 1 and the rear sensors 7 are positioned at a rear of the vehicle 1. The individual sensor units of the sensor device can be ultrasonic sensors. Alternatively or additionally, the sensor device 5 can comprise at least one radar device and/or at least one camera. The sensor device 5 is configured to provide sensor data, which is in the following referred to as sensor information 20 (see reference sign 20 in Fig. 3). The sensor information 20 describe an environment of the vehicle 1. The environment is determined by a coverage area of the sensor device 5.

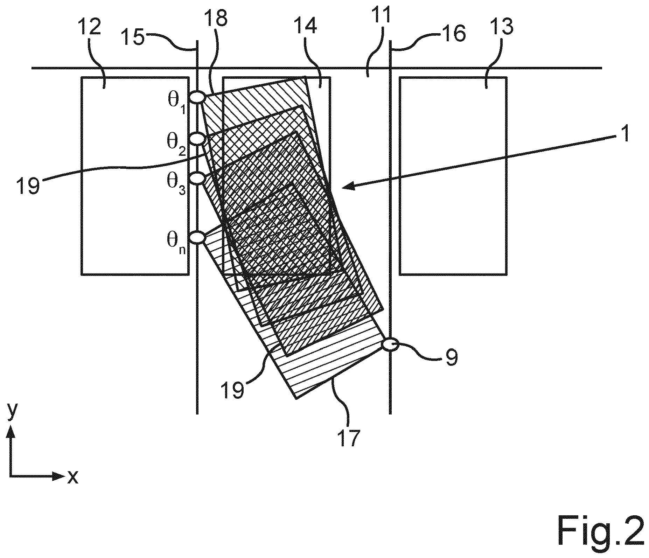

Highlighted in Fig. 1 are a front outermost corner 8, a rear outermost corner 9 and a center of a rear axle 10 of the vehicle 1. The outermost corners 8, 9 are relevant for left steering in order to park the vehicle 1. The front outermost corner 8 and the rear outermost corner 9 are positioned at opposite sides of the vehicle 1 both in a longitudinal direction or length directions (x-direction) as well as in a transverse direction or width direction (y-direction) of the vehicle 1. The rear outermost corner 9 can alternatively be referred to as rear innermost corner, in particular when viewed in relation to a parking space 11 as shown in Fig. 2. Both outermost corners 8, 9 are, however, located at an outer edge of the vehicle 1, more precisely of a front or rear part of the vehicle 1, respectively.

Fig. 2 shows a parking environment. There is a central parking lot in the parking environment. The parking lot is referred to as parking space 11. The parking space 11 is located between a first object 12 and a second object 13. The first object 12 is positioned opposite to the second object 13. The parking space 11 is laterally bounded by the two objects 12, 13. The two objects 12, 13 are, for example, parked other vehicles 1. The vehicle 1 is to be parked in the parking space 11 or is to leave the parking space 11. The coordinate system in Fig. 2 shows an x-direction that can be referred to as horizontal direction and a y-direction that can be referred to as vertical direction. The y-direction corresponds essentially to the driving direction during parking in or out of the parking space 11. The x-direction here is parallel to a width of the parking space 11.

There is a first boundary line 15 that limits the parking space 11 in direction of the first object 12 and a second boundary line 16 that limits the parking space 11 in direction of the second object 13. The first boundary line 15 and the second boundary line 16 can alternatively be referred to as depth tolerance lines of the parking space 11. The second object 13 may be referred to as start object and the first object 12 as end object.

Fig. 2 shows a parking position 14 in the parking space 11. The parking position 14 is an intended or desired position of the vehicle 1 parked in the parking space 11. The parking position 14 can alternatively be referred to as goal position or target position of the vehicle 1. In case of leaving the parking space 11, meaning in case of parking out, the parking position 14 is a start position of the method that is described in the following. If the vehicle 1 is parked in the parking space 11, the parking position 14 is a final position the vehicle 1 reaches.

A first position 17 of the vehicle 1 is a position in which the vehicle 1 is not yet parked in the parking position 14. In the first position 17, the front outermost corner 8 of the vehicle 1 is positioned on the first boundary line 15, whereas the rear outermost corner 9 of the vehicle 1 is positioned on the second boundary line 16. In the first position 17, the vehicle 1 is movable away from the parking space 11 without collision with the first object 12 or the second object 13. This is because the distance between the rear outermost corner 9 and a surface of the second object 13 is chosen large enough for the vehicle 1 to be able to steer away from the parking space 11 at any steering angle without collision with the objects 12, 13.

A second position 18 of the vehicle 1 is a position in which the front outermost corner 8 of the vehicle 1 is positioned on the first boundary line 15. The second position 18 is reachable by moving the vehicle 1 with regard to the parking position 14 at a maximum steering angle of the steering system 3 of the vehicle 1.

There are multiple intermediate positions 19 between the first position 17 and the second position 18. All these positions are located along the first boundary line 15. In the intermediate positions 19, the front outermost corner 8 of the vehicle 1 is essentially located on the first boundary line 15. In other words, between the first position 17 and the second position 18, the vehicle 1 is preferably moved along the first boundary line 15. The sketched angles $\theta_1$, $\theta_2$, $\theta_3$ and $\theta_n$ are angles given in relation to, for example, the horizontal line, meaning the sketched x-direction. In the parking position 14, the angle would be $\theta_0$ (not sketched here). In the first position 17 the angle is $\theta_n$ and in the second position 18 it is $\theta_1$. The $\theta$-angle increases from $\theta_1$ to $\theta_n$, meaning that the vehicle 1 is more and more turned from the alignment in the parking position 14 to, for example, an alignment in which the length of the vehicle 1 is oriented parallel to the x-axis. The angles $\theta_2$, $\theta_3$ refer to two possible intermediate positions 19.

Fig. 3 shows steps of a method to operate an at least assisted forward perpendicular or angled parking function of the vehicle 1. A first step S1 comprises capturing the sensor information 20 by, for example, the front sensors 6 as well as the rear sensors 7. The sensor information 12 is hence preferably captured by a sensor device 5 of the vehicle 1. The sensor information 20 describes the parking space 11 that is laterally bounded by the first object 12 and the opposite second object 13 as shown in Fig. 1. In a step S2, the sensor information 20 is provided for the processing device 2 of the vehicle 1.

In a step S3, by means of the processing device 2, a parking position information 22 is determined which describes the parking position 14 and the parking space 11. Furthermore, a first boundary line information 23 describing the first boundary line 15 and a second boundary line information 24 describing the second boundary line 16 are determined. This is done by evaluating the provided sensor information 20 as well as preferably a vehicle dimension information 21 that describes the dimensions of the vehicle 1.

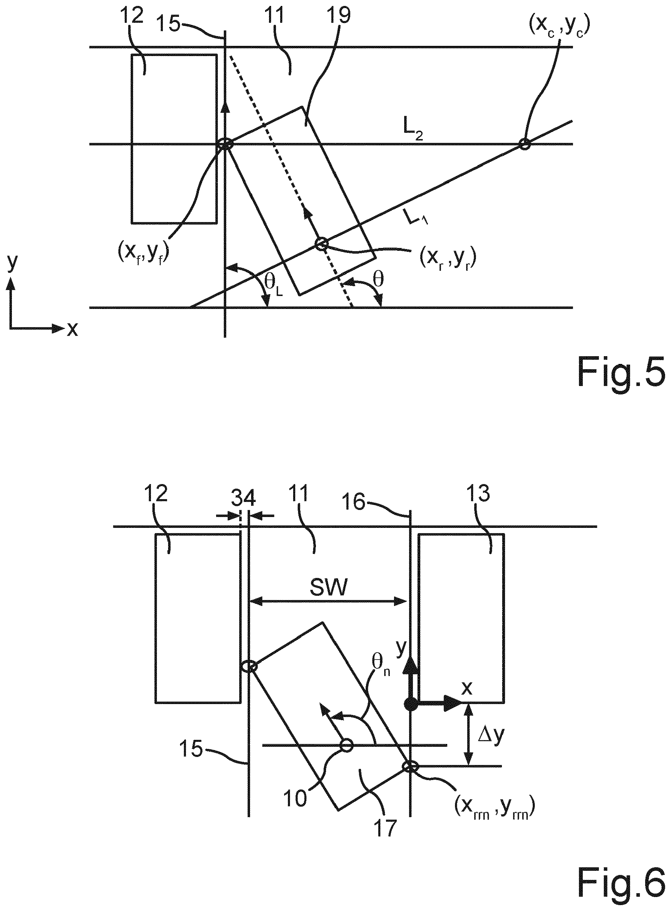

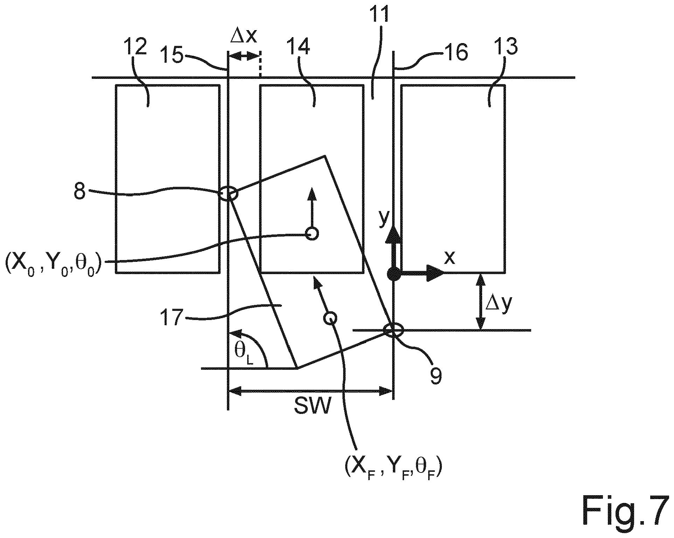

A step S4 comprises determining a first position information 25 describing the first position 17 of the vehicle 1. This is carried out under consideration of the determined first boundary line information 23 and second boundary line information 24. It is furthermore possible to consider the vehicle dimension information 21 as well as a distance information 26. The distance information 26 describes a distance between the rear outermost corner 9 of the vehicle 1 and a front line of the second object 13 in the first position 17. This is done under consideration of a parking space geometry and/or a dimension of the second object 13 which are, in particular, determined by evaluating the provided sensor information 20. This distance information 26 can be referred to as $\Delta y$ and is, for example, sketched in Fig. 6 and 7.

In Fig. 3, a step S5 comprises determining steering commands 27 for the steering system 3 of the vehicle 1 under consideration of the determined parking position information 22 and the first position information 25. Besides, the vehicle dimension information 21 can be considered as well. The steering commands 27 describe a steering maneuver to move the vehicle 1 between the first position 17 and the parking position 14 without collision with the first object 12 and the second object 13, wherein the steering maneuver is a forward parking maneuver and comprises moving the vehicle 1 with its front outermost corner 8 at least partially along the first boundary line 15. It is also possible to determine acceleration commands 28 for the drive system 4 of the vehicle 1. The acceleration commands 28 describe a longitudinal guidance for the vehicle 1 between the first position 17 and the parking position 14.

A step S6 comprises operating the vehicle 1 according to the determined steering commands 27. It is further possible to operate the vehicle 1 according to the determined acceleration commands 28. The method hence results in at least assisted, meaning in at least semi-automatic, parking of the vehicle 1.

In a step S7, it is possible to determine a second position information 29. The second position information 29 describes the second position 18 of the vehicle 1. It is determined under consideration of the parking position information 22 and the first boundary line information 23. Furthermore, the vehicle dimension information 21 can be considered. The steering commands 27 and/or the acceleration commands 28 as determined in step S5 may comprise moving the vehicle 1 between the first position 17 and the parking position 14 via the second position 18. This also comprises moving the vehicle 1 in step S6 via the intermediate positions 19. By doing so, the vehicle 1 moves between the first position 17 and the second position 18 essentially along the first boundary line 15.

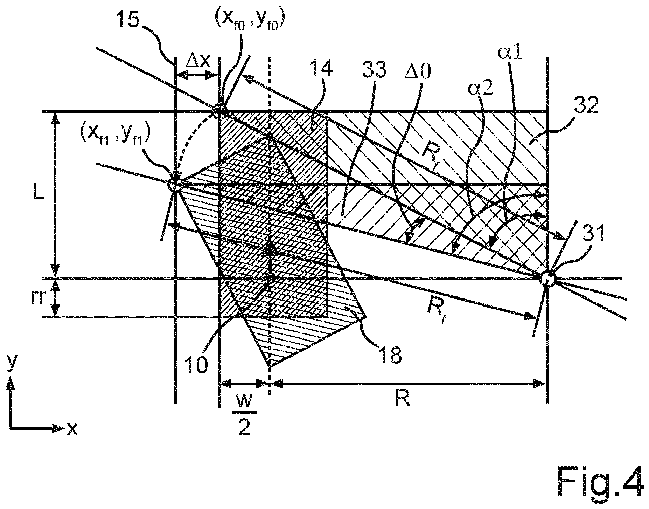

Determining the second position information 29 comprises calculating an angle information 30 describing an angle between a location of a reference point of the vehicle 1, which is, for example, the front outermost corner 8 of the vehicle 1, in parking position 14 and the location of the reference point in the second position 18. This angle is referred to as $\Delta\theta$ in Fig. 4. The angle information 30 is calculated in relation to a center of rotation 31 as sketched in Fig. 4. The center of rotation 31 is determined under consideration of the maximum steering angle of the vehicle 1.

Regarding step S3, Fig. 3 shows an embodiment according to which a passenger information 35 is determined. The passenger information 35 describes at least if the vehicle 1 comprises at least one vehicle occupant other than a driver or not. If the vehicle 1 only comprises the driver according to the determined passenger information 35, the determined parking position information 22 describes a parking position 14 at which there is a greater gap between the vehicle 1 and the object 12, 13 on the driver's side, which is here, for example, the side facing the second object 13, compared to the gap between the vehicle 1 and the object 12, 13 on the passenger's side of the vehicle 1, which is here the first object 12. Step S3, which comprises determining the parking position information 22 can hence consider the determined passenger information 35. Alternatively, the parking position 14 is centered between the two objects 12, 13.

Fig. 4 shows different variables necessary to determine the second position 18. There is a distance between the parking position 14 and the first boundary line in x-direction ($\Delta x$), and dimensions of the vehicle including safety tolerances which are length (L), width (w), and distance between the rear axle and a rear bumper (rr). Not sketched in Fig. 4 is a wheelbase ($\ell$) of the vehicle 1. The position of the front outermost corner 8 in the parking position 14 has the coordinates ($x_{f0}$, $y_{f0}$) and in the second position 18 the coordinates ($x_{f1}$, $y_{f1}$). Besides, $R_f$ indicates the radius of rotation of the front outermost corner 8 and R the radius of rotation of the center of the rear axle 10. In order to calculate the angle information 13 ($\Delta\theta$) to determine the second position 18, the angles $\alpha 1$ and $\alpha 2$ are considered. Triangles 32, 33 connected to the angles $\alpha 1$ and $\alpha 2$ are marked with respective hatchings in Fig. 4.

Given the orientation of the vehicle at the parking position ($\theta_0$), $\Delta x$, and the vehicle dimensions, the orientation of the vehicle 1 at the second potion ($\theta_1$) can be computed as follows based on trigonometry shown in Fig. 4. Based on the triangles 32, 33, the following equations can be obtained:

$$\alpha_2 - \alpha_1 = \Delta\theta$$

$$R_f \sin(\alpha_2) - R_f \sin(\alpha_1) = \Delta x$$

$$\therefore R_f \sin(\alpha_1 + \Delta\theta) - R_f \sin(\alpha_1) = \Delta x$$

$$\therefore R_f [\sin(\alpha_1) \cos(\Delta\theta) + \cos(\alpha_1) \sin(\Delta\theta)] - R_f \sin(\alpha_1) = \Delta x$$

$$\therefore \sin(\alpha_1) \cos(\Delta\theta) + \cos(\alpha_1) \sin(\Delta\theta) - \sin(\alpha_1) = \frac{\Delta x}{R_f}$$

From triangle 32 in Fig. 4, we can deduce the following equations:

$$\sin(\alpha_1) = \frac{R + \frac{w}{2}}{R_f}$$

$$\cos(\alpha_1) = \frac{L - rr}{R_f}$$

Where $R_f$ is the radius of rotation of the outermost front corner 8 and R is the radius of rotation of the center of the rear axle 10 defined as follows.

$$R_f = \sqrt{\left(R + \frac{w}{2}\right)^2 + (L - rr)^2}$$

$$R = \frac{\ell}{\tan(\varphi_{max})}$$

$\varphi_{max}$ is the given maximum wheel angle the vehicle 1 can steer while reaching the goal in parking-in, or steering initially while parking-out.

$$\therefore \left(\frac{R + \frac{w}{2}}{R_f}\right) \cos(\Delta\theta) + \left(\frac{L - rr}{R_f}\right) \sin(\Delta\theta) - \left(\frac{R + \frac{w}{2}}{R_f}\right) = \frac{\Delta x}{R_f}$$

$$\therefore \left(R + \frac{w}{2}\right) \cos(\Delta\theta) + (L - rr) \sin(\Delta\theta) = \Delta x + R + \frac{w}{2}$$

$$\therefore A \, \cos(\Delta\theta) + B \, \sin(\Delta\theta) = C$$

$$\therefore A \, \cos(\Delta\theta) = C - B \sin(\Delta\theta)$$

By squaring both sides of the equation:

$$\therefore A^2 \, \cos^2(\Delta\theta) = C^2 + B^2 \, \sin^2(\Delta\theta) - 2CB \sin(\Delta\theta)$$

$$\therefore A^2 \, (1 - \sin^2(\Delta\theta)) = C^2 + B^2 \, \sin^2(\Delta\theta) - 2CB \sin(\Delta\theta)$$

$$\therefore A^2 - A^2 \sin^2(\Delta\theta) = C^2 + B^2 \sin^2(\Delta\theta) - 2CB \sin(\Delta\theta)$$

$$\therefore (A^2 + B^2) \sin^2(\Delta\theta) - 2CB \sin(\Delta\theta) + C^2 - A^2 = 0$$

$$\therefore \sin(\Delta\theta) = \frac{CB \pm A \sqrt{A^2 + B^2 - C^2}}{(A^2 + B^2)}$$

$$\therefore \Delta\theta = \sin^{-1}\left[\frac{CB \pm A \sqrt{A^2 + B^2 - C^2}}{(A^2 + B^2)}\right]$$

$$\because CB > A \sqrt{A^2 + B^2 - C^2}$$

As $\Delta\theta$ is the smallest positive value

$$\therefore \Delta\theta = \sin^{-1}\left[\frac{CB - A \sqrt{A^2 + B^2 - C^2}}{(A^2 + B^2)}\right]$$

where,

$$A = R + \frac{w}{2}$$

$$B = L - rr$$

$$C = \Delta x + R + \frac{w}{2}$$

This results in:

$$\theta_1 = \theta_0 + \Delta\theta$$

Moreover, the location of the front outermost corner 8 of the vehicle 1 at the second position 18 ($x_{f_1}$, $y_{f_1}$) can

be computed from the location of the front outermost corner 8 of the vehicle 1 at the parking position 17 $(x_{f_0}, y_{f_0})$ as follows:

$$x_{f_1} = x_{f_0} - \Delta x$$

$$y_{f_1} = y_{f_0} + R_f \cos(\alpha_1 + \Delta\theta) - R_f \cos(\alpha_1)$$

By determining the coordinates $(x_{f_1}, y_{f_1})$, a position along a parking trajectory of the vehicle 1 is determined, wherein the steering commands 27 describe a movement of the vehicle 1 along the trajectory.

Fig. 5 illustrates two lines L1 and L2 which are important to determine the steering commands 27 between the first position 17 and the second position 18. The coordinates of the front outermost corner 8 in any intermediate position 19 are $(x_f, y_f)$. The coordinates of the center of the rear axle 10 are $(x_r, y_r)$.

In the following, it is explained how to compute the steering commands 27 so that the front outermost corner 8 moves in a straight line (dashed line) starting with given orientation $\theta_1$ at the second position 18 and ending with given orientation $\theta_n$ at the first position 17. Based on trigonometry, the wheel angle $(\varphi)$ of the vehicle 1 corresponding to each specific orientation $(\theta)$ is calculated. At every position of the vehicle 1 where the front outermost corner 8 of the vehicle 1 is located on the dashed line and the orientation of the vehicle 1 is known, both locations of the front outermost corner 8 with coordinates $(x_f, y_f)$ and the center of rear axle 10 with coordinates $(x_r, y_r)$ can be determined. The location of the front outermost corner 8 is obtained based on the sampling of the dashed line starting from the defined second position 18 with the coordinates $(x_{f_1}, y_{f_1})$ and ending with the defined first position 17 with the coordinates $(x_{f_n}, y_{f_n})$.

The position of the center of rear axle 10 with the coordinates $(x_r, y_r)$ is computed from the given position of the front outermost corner 8 with the coordinates $(x_f, y_f)$, vehicle dimensions, and vehicle orientation $(\theta)$ as follows.

$$x_r = x_f + \frac{w}{2}\sin(\theta) - (L - rr)\cos(\theta)$$

$$y_r = y_f - \frac{w}{2}\cos(\theta) - (L - rr)\sin(\theta)$$

The two points $(x_r, y_r)$ and $(x_f, y_f)$, the orientation of the vehicle $(\theta)$ and the orientation of the dashed line $(\theta_L)$, and the perpendicular lines L1 and L2 are known. The center of rotation point 31 with the coordinates $(x_c, y_c)$ is the intersection of the two lines L1 and L2. Accordingly, the radius of rotation of the vehicle (R) is the distance between the center of rotation 31 with the coordinates $(x_c, y_c)$ and the center of rea axle with the coordinates $(x_r, y_r)$. Thus, the corresponding wheel angle $(\varphi)$ can be computed as follows:

$$L_1 : \frac{y - y_r}{x - x_r} = \frac{-1}{\tan(\theta)} = K_1$$

$$L_2 : \frac{y - y_f}{x - x_f} = \frac{-1}{\tan(\theta_L)} = K_2$$

$$\therefore y_c - y_r = K_1(x_c - x_r)$$

$$\therefore y_c - y_f = K_2(x_c - x_f)$$

By subtracting the two equations:

$$\therefore y_r - y_f = (K_2 - K_1)x_c - K_2 x_f + K_1 x_r$$

$$\therefore x_c = \frac{y_r - y_f + K_2\, x_f - K_1\, x_r}{K_2 - K_1}$$

$$\therefore y_c = y_r + K_1\,(x_c - x_r)$$

$$\therefore R = \sqrt{(x_r - x_c)^2 + (y_r - y_c)^2}$$

$$\therefore \varphi = \tan^{-1}\left(\frac{\ell}{R}\right)$$

The steering commands 27 are determined based on the wheel angles ($\varphi$) for all possible intermediate positions 19 between the first position 17 and the second position 18.

Fig. 6 illustrates how to determine the orientation ($\theta_n$) of the vehicle 1 in the first position 17. The angle between the horizontal line (x-direction) and the orientation of the vehicle 1 in this position is defined as $\theta_n$. Fig. 6 shows the distance information 26 as $\Delta y$. In the first position 17, the rear outermost corner 9 of the vehicle 1 has the coordinates: $(x_{rr_n}, y_{rr_n})$ (sketched as $(x_{rrn}, y_{rrn})$ in Fig. 6).

The respective coordinate of the front outermost corner 8 in the first position 17 is described as $(x_{fn}, y_{fn})$ (not sketched here). The width of the parking space 11 is indicated as SW. SW is the distance between the boundary lines 15, 16. Furthermore, Fig. 6 illustrates the boundary line distance 34.

As shown in figure 6, the first position 17 is defined as the position at which the front outermost corner 8 of the vehicle 1 is located on the first boundary line 15 and the rear outermost corner 9 on the second boundary line 16. Both boundary lines 15, 16 are defined with tolerance safety distances to the depth lines of the objects 12, 13, respectively. The rear outermost corner 9 should be at least at a specific distance $\Delta y$ from a second object 13 face line. The distance $\Delta y$ corresponds to the distance information 26 and can be configured based on the scenario and the parking space structure so that the vehicle 1 can steer freely at the first position 17 to totally move outside the parking space 11 (park-out) or drive inside the parking space 11 (park-in) without any collision.

The orientation of the vehicle at the end position ($\theta_n$) can be calculated as follows:

$$-L\,\cos(\theta_n) + w\,\sin(\theta_n) = SW$$

$$\therefore L\,\cos(\theta_n) = w\,\sin(\theta_n) - SW$$

By squaring:

$$\therefore L^2\,\cos^2(\theta_n) = w^2\,\sin^2(\theta_n) + SW^2 - 2\,w\,SW\,\sin(\theta_n)$$

$$\therefore L^2\,(1 - \sin^2(\theta_n)) = w^2\,\sin^2(\theta_n) + SW^2 - 2\,w\,SW\,\sin(\theta_n)$$

$$\therefore (L^2 + w^2)\,\sin^2(\theta_n) - (2\,w\,SW)\,\sin(\theta_n) + (SW^2 - L^2) = 0$$

$$\sin(\theta_n) = \frac{2\,w\,SW \pm \sqrt{4\,w^2\,SW^2 - 4(L^2 + w^2)(SW^2 - L^2)}}{2\,(L^2 + w^2)}$$

$$\sin(\theta_n) = \frac{w\,SW \pm L\,\sqrt{L^2 - SW^2 + w^2}}{(L^2 + w^2)}$$

$$\therefore \theta_n = \sin^{-1}\left(\frac{w\,SW \pm L\sqrt{L^2 - SW^2 + w^2}}{(L^2 + w^2)}\right)$$

$$\because w\,SW < L\sqrt{L^2 - SW^2 + w^2}$$

As $\theta_n > 0$ for a parking space 11 located at the right of the vehicle 1, then for such a right slot $\theta_n$ can be formulated as follows:

$$\therefore \theta_n = \sin^{-1}\left(\frac{w\,SW + L\sqrt{L^2 - SW^2 + w^2}}{(L^2 + w^2)}\right)$$

As $\theta_n < 0$ for a parking space 11 located at the left of the vehicle 1, then for such a left slot $\theta_n$ can be formulated as follows:

$$\therefore \theta_n = \sin^{-1}\left(\frac{w\,SW - L\sqrt{L^2 - SW^2 + w^2}}{(L^2 + w^2)}\right)$$

Since the rear outermost corner 9 at the first position 17 with coordinates $(x_{rrn}, y_{rrn})$ is defined as it is located on the second boundary line 16 at the distance $\Delta y$ from the face line of the second object 13, the location of the front outermost corner 8 at the first position 17 with coordinates $(x_{f_n}, y_{f_n})$ can be calculated as follows:

$$x_{f_n} = x_{rr_n} + L\,\cos(\theta_n) - w\,\sin(\theta_n)$$

$$y_{f_n} = y_{rr_n} + L\,\sin(\theta_n) + w\,\cos(\theta_n)$$

In summary, the calculated coordinates $(x_{f_n}, y_{f_n})$ define the first position 17 so that the steering commands 27 can be determined to move the vehicle 1 between this first position 17 and the parking position 14, wherein the parking position 14 is determined based on the sensor information 20 describing the parking space 11.

Fig. 7 shows the vehicle 1 in the first position 17. Here, the vehicle 1 is parked centered in the parking space 11. Besides, angles of the vehicle 1 in the parking position 14 as well as in the first position 17 are sketched. The complete set of coordinates for the center of the rear axle 10 in the parking position 14 is hence $(X_0, Y_0, \theta_0)$ and in the first position 17 $(X_F, Y_F, \theta_F)$.

In summary, the invention discloses an optimal planning strategy for diagonal and in particular perpendicular forward parking drive in. This is based on the idea that the front outermost corner 8 (here the front left corner) of the vehicle 1 moves almost parallel to the first boundary line 15 within specific tolerance distance so that the vehicle 1 can make the best possible steering maneuver without colliding with any of the objects 12, 13. At the same time, the location of the vehicle 1 during that steering maneuver shall guarantee to be collision-free with the objects 12, 13 as well by calculating the steering end orientations of the vehicle 1 that do not exceed the slot boundaries, meaning the boundary lines 15, 16. In the first position 17, the second position 18, the intermediate positions 19 and the parking position 14 no outermost corner 8, 9 of the vehicle 1 ever exceeds beyond any of the boundary lines 15, 16 but stays within the area of the parking space 11 that is in width limited by the two boundary lines 15, 16.

The algorithm to compute the final frame (first position 17) and the intermediate frames (intermediate positions 19) with the corresponding wheel angles until reaching the final frame (first position 17) starting from the given initial frame (parking position 14) is listed as follows.

$$[x, y, \theta, \varphi, X_F, Y_F, \theta_F] = Generate\_Optimal\_Path(X_0, Y_0, \theta_0, L, w, \ell, rr, \varphi_{max}, \Delta x, \Delta y, SW, \theta_L)$$

$$R = \frac{\ell}{\tan(\varphi_{max})}$$

$$A = R + \frac{w}{2}$$

$$B = L - rr$$

$$C = \Delta x + R + \frac{w}{2}$$

$$\Delta\theta = \sin^{-1}\left[\frac{CB - A\sqrt{A^2 + B^2 - C^2}}{(A^2 + B^2)}\right]$$

$$\theta_1 = \theta_0 + \Delta\theta$$

$$x_{f_0} = X_0 - \frac{w}{2}\sin(\theta_0) + (L - rr)\cos(\theta_0)$$

$$y_{f_0} = Y_0 + \frac{w}{2}\cos(\theta_0) + (L - rr)\sin(\theta_0)$$

$$x_{f_1} = x_{f_0} - \Delta x$$

$$y_{f_1} = y_{f_0} + (L - rr)\cos(\Delta\theta) - \left(R + \frac{w}{2}\right)\sin(\Delta\theta) - (L - rr)$$

$$x_1 = x_{f_1} + \frac{w}{2}\sin(\theta_1) - (L - rr)\cos(\theta_1)$$

$$y_1 = y_{f_1} - \frac{w}{2}\cos(\theta_1) - (L - rr)\sin(\theta_1)$$

$$if\ slot\ right$$

$$\theta_F = \theta_n = \sin^{-1}\left(\frac{w\ SW + L\ \sqrt{L^2 - SW^2 + w^2}}{(L^2 + w^2)}\right)$$

$$else$$

$$\theta_F = \theta_n = \sin^{-1}\left(\frac{w\ SW - L\ \sqrt{L^2 - SW^2 + w^2}}{(L^2 + w^2)}\right)$$

$$x_{rr_n} = -\Delta Y\cos(\theta_L)$$

$$y_{rr_n} = -\Delta Y\sin(\theta_L)$$

$$x_{f_n} = x_{rr_n} + L\cos(\theta_n) - w\sin(\theta_n)$$

$$y_{f_n} = y_{rr_n} + L\sin(\theta_n) + w\cos(\theta_n)$$

$$X_F = x_n = x_{rr_n} + rr\cos(\theta_n) - \frac{w}{2}\sin(\theta_n)$$

$$Y_F = y_n = y_{rr_n} + rr\sin(\theta_n) + \frac{w}{2}\cos(\theta_n)$$

$$K_2 = \frac{-1}{\tan(\theta_L)}$$

$$K_1 = \frac{-1}{\tan(\theta_1)}$$

$$x_c = \frac{y_1 - y_{f_1} + K_2\ x_{f_1} - K_1\ x_1}{K_2 - K_1}$$

$$y_c = y_1 + K_1(x_c - x_1)$$

$$R = \sqrt{(x_1 - x_c)^2 + (y_1 - y_c)^2}$$

$$\varphi_1 = \tan^{-1}\left(\frac{\ell}{R}\right)$$

$$K_1 = \frac{-1}{\tan(\theta_n)}$$

$$x_c = \frac{y_n - yf_n + K_2\, xf_n - K_1\, x_n}{K_2 - K_1}$$

$$y_c = y_n + K_1\,(x_c - x_n)$$

$$R = \sqrt{(x_n - x_c)^2 + (y_n - y_c)^2}$$

$$\varphi_n = \tan^{-1}\left(\frac{\ell}{R}\right)$$

$$step_y = \frac{yf_n - yf_1}{n-2}$$

$$step_\theta = \frac{\theta_n - \theta_1}{n-2}$$

$$for\ i = 2 \rightarrow n-1$$

$$\theta_i = \theta_{i-1} + step_\theta$$

$$yf_i = yf_{i-1} + step_y$$

$$xf_i = xf_{i-1} - K_2\left(yf_i - yf_{i-1}\right)$$

$$x_i = xf_i + \frac{w}{2}\sin(\theta_i) - (L - rr)\cos(\theta_i)$$

$$y_i = yf_i - \frac{w}{2}\cos(\theta_i) - (L - rr)\sin(\theta_i)$$

$$K_1 = \frac{-1}{\tan(\theta_i)}$$

$$x_c = \frac{y_i - yf_i + K_2\, xf_i - K_1\, x_i}{K_2 - K_1}$$

$$y_c = y_i + K_1\,(x_c - x_i)$$

$$R = \sqrt{(x_i - x_c)^2 + (y_i - y_c)^2}$$

$$\varphi_i = \tan^{-1}\left(\frac{\ell}{R}\right)$$

$$end$$

$$x = [x_1, x_2, .., x_n]$$

$$y = [y_1, y_2, .., y_n]$$

$$\theta = [\theta_1, \theta_2, .., \theta_n]$$

$$\varphi = [\varphi_1, \varphi_2, .., \varphi_n]$$

**Claims**

1. Method to operate an at least assisted forward perpendicular or angled parking function for a vehicle (1) comprising:

   - providing (S2) a sensor information (20) describing a perpendicular or angled parking space (11) laterally bounded by a first object (12) and an opposite second object (13);
   - by evaluating the provided sensor information (20), determining (S3) a parking position information (22) describing a parking position (14) in the parking space (11), and a first boundary line information (23) describing a first boundary line (15) for the parking space (11) in direction of the first object (12);
   - under consideration of the determined first boundary line information (23), determining (S4) a first position information (25) describing a first position (17) of the vehicle (1) in which a front outermost corner (8) of the vehicle (1) is positioned on the first boundary line (15), wherein in the first position (17) the vehicle (1) is movable away from the parking space (11) without collision with the first object (12) and/or second object (13);
- under consideration of the determined parking position information (22) and first position information (25), determining (S5) steering commands (27) for a steering system (3) of the vehicle (1), wherein the steering commands (27) describe a steering maneuver to move the vehicle (1) between the first position (17) and the parking position (14) without collision with the first object (12) and/or the second object (13), wherein the steering maneuver is a forward parking maneuver and comprises moving the vehicle (1) with its front outermost corner (8) at least partially along the first boundary line (15); and
- operating (S6) the vehicle (1) according to the determined steering commands (27).

2. Method according to claim 1, comprising determining (S7) a second position information (29) describing a second position (18) of the vehicle (1) in which the front outermost corner (8) of the vehicle (1) is positioned on the first boundary line (15), wherein the second position (18) is reachable by moving the vehicle (1) with regard to the parking position (14) at a maximum steering angle of the steering system (3), wherein determining the steering commands (27) comprises considering the determined second position information (29) so that the steering maneuver comprises moving the vehicle (1) via the determined second position (18).

3. Method according to claim 2, wherein determining the second position information (29) comprises calculating an angle information (30) describing an angle difference between a location of a reference point of the vehicle (1) in the parking position (14) and the location of the reference point in the second position (18), wherein in particular the reference point is the front outermost corner (8) of the vehicle (1).

4. Method according to claim 3, wherein the angle information (30) is calculated in relation to a center of rotation (31) of the vehicle (1), wherein the center of rotation (31) is determined under consideration of the maximum steering angle.

5. Method according to any of claims 2 to 4, wherein the determined steering commands (27) comprise that the movement of the vehicle (1) between the first position (17) and the second position (18) is essentially along the first boundary line (15).

6. Method according to any of the preceding claims, comprising determining a second boundary line information (24) describing a second boundary line (16) for the parking space (11) in direction of the second object (13) by evaluating the provided sensor information (20) and determining the first position information (25) under consideration of the second boundary line information (24), wherein in the first position (17) a rear outermost corner (9) of the vehicle (1), which is in particular located in transverse direction opposite the front outermost corner (8), is positioned on the second boundary line (16).

7. Method according claim 6, comprising determining a distance information (26), which describes a distance between the rear outermost corner (9) of the vehicle (1) and a front line of the second object (13) in the first position (17), under consideration of a parking space geometry and/or a dimension of the second object (13), which are in particular determined by evaluating the provided sensor information (20), wherein determining the first position information (25) comprises considering the determined distance information (26).

8. Method according to claim 6 or 7, wherein a boundary line distance (34) between the object (12, 13) and the respective boundary line (15, 16) corresponds to a distance measurement tolerance range of a sensor device (5) providing the sensor information (20).

9. Method according to any of the preceding claims, wherein the determined parking position information (22) describes a parking position (14) located centered in the parking space (11).

10. Method according to any of claims 1 to 8, comprising determining a passenger information (35) describing at least if the vehicle (1) comprises at least one vehicle occupant other than a driver or not, wherein if the vehicle (1) only comprises the driver according to the determined passenger information (35), the determined parking position information (22) describes a parking position (14) at which there is a greater gap between the vehicle (1) and the object (12, 13) on a driver's side of the vehicle (1) compared to a gap between the vehicle (1) and the object (12, 13) on a passenger's side of the vehicle (1).

11. Method according to any of the preceding claims, comprising determining acceleration commands (28) for a drive system (4) of the vehicle (1), wherein the acceleration commands (28) describe a longitudinal guidance for the vehicle (1) between the first position (17) and the parking position (14), and operating the vehicle (1) according to the determined acceleration commands (28).

12. Vehicle (1) with an at least assisted forward perpendicular or angled parking function, wherein the vehicle (1) is configured:

- to provide a sensor information (20) describing a perpendicular or angled parking space (11) laterally bounded by a first object (12) and an opposite second object (13);
- by evaluating the provided sensor information (20), to determine a parking position information (22) describing a parking position (14) in the parking space (11), and a first boundary line information (23) describing a first boundary line (15) for the parking space (11) in direction of the first object (12);
- under consideration of the determined first boundary line information (23), to determine a first position information (25) describing a first position (17) of the vehicle (1) in which a front outermost corner (8) of the vehicle (1) is positioned on the first boundary line (15), wherein in the first position (17) the vehicle (1) is movable away from the parking space (11) without collision with the first object (12) and/or the second object (13);
- under consideration of the determined parking position information (22) and first position information (25), to determine steering commands (27) for a steering system (3) of the vehicle (1), wherein the steering commands (27) describe a steering maneuver to move the vehicle (1) between the first position (17) and the parking position (14) without collision with the first object (12) and/or the second object (13), wherein the steering maneuver is a forward parking maneuver and comprises moving the vehicle (1) with its front outermost corner (8) at least partially along the first boundary line (15); and
- to operate the vehicle (1) according to the determined steering commands (27).

13. Vehicle (1) according to claim 12, wherein the vehicle (1) comprises a sensor device (5), in particular an ultrasonic sensor, a radar device and/or a camera, wherein the sensor device (5) in configured to capture and provide the sensor information (20), wherein the sensor device (5) in particular comprises multiple sensor units positioned at least at a front and rear side of the vehicle (1).

14. Processing device (2) for a vehicle (1) configured to perform a method according to any of claims 1 to 11.

15. Computer program product comprising instructions which, when the program is executed by a processing device (2), cause the processing device (2) to carry out a method according to any of claims 1 to 11.

Fig.1

Fig.2

Fig.3

EP 4 289 703 A1

Fig.4

Fig.5

Fig.6

Fig.7

**EUROPEAN SEARCH REPORT**

Europäisches Patentamt
European Patent Office
Office européen des brevets

Application Number

EP 22 17 7626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/101925 A1 (SIMMONS KYLE [US] ET AL) 4 April 2019 (2019-04-04) | 1-9, 11-15 | INV. B62D15/02 |
| Y | * paragraphs [0002], [0031] – [0039], [0059]; claims; figures * | 10 | |
| Y | EP 3 053 809 A1 (APPLIC SOLUTIONS ELECTRONICS & VISION LTD [GB]) 10 August 2016 (2016-08-10) * paragraphs [0038] – [0039]; claims; figures * | 10 | |
| Y | CN 108 945 100 A (AUDI AG) 7 December 2018 (2018-12-07) * paragraphs [0041] – [0048] * | 10 | |

TECHNICAL FIELDS
SEARCHED      (IPC)

B62D

The present search report has been drawn up for all claims

| Place of search | Date of completion of the search | Examiner |
|---|---|---|
| The Hague | 1 November 2022 | Ducher, Alban |

EPO FORM 1503 03.82 (P04C01)

**ANNEX TO THE EUROPEAN SEARCH REPORT
ON EUROPEAN PATENT APPLICATION NO.**

EP 22 17 7626

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2022

| Patent document cited in search report | | Publication date | Patent family member(s) | | Publication date |
|---|---|---|---|---|---|
| US 2019101925 | A1 | 04-04-2019 | CN 109591807 | A | 09-04-2019 |
| | | | DE 102018124130 | A1 | 04-04-2019 |
| | | | US 2019101925 | A1 | 04-04-2019 |
| EP 3053809 | A1 | 10-08-2016 | EP 3053809 | A1 | 10-08-2016 |
| | | | JP 2018510801 | A | 19-04-2018 |
| | | | US 2017334353 | A1 | 23-11-2017 |
| | | | WO 2016128181 | A1 | 18-08-2016 |
| CN 108945100 | A | 07-12-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009040373 A1